# EUROPEAN PATENT APPLICATION

(11) **EP 3 974 773 A1**
(43) Date of publication of application: **30.03.2022**
(21) Application number: 21197974.5
(22) Date of filing: 21.09.2021
(51) Int. Cl.: G01C 11/08, G01C 11/36, G01C 21/36, G08G 1/16, B60R 1/22

(54) **INFORMATION DISPLAY SYSTEM, CONTROL METHOD OF INFORMATION DISPLAY SYSTEM, AND CONTROL PROGRAM OF INFORMATION DISPLAY SYSTEM**

(30) Priority: 24.09.2020 JP 2020160225
(71) Applicant: Topcon Corporation, Tokyo 174-8580 (JP)
(72) Inventor: SASAKI, Takeshi, Itabashi-ku, 174-8580 (JP)
(74) Representative: Mewburn Ellis LLP

(57) **Abstract**

An object of the present invention is to provide an information display system and the like capable of showing to an object person viewing a display portion, such as a display, an object displayed on the display portion from a point of view of the operator in an accurate manner. The information display system includes: a plurality of imaging apparatuses that image an object from a point of view that differs from a point of view of a user; and a display portion that displays the object from the point of view of the user, wherein the information display system generates three-dimensional information of the object on the basis of imaging information obtained by imaging the object by the plurality of imaging apparatuses and displays, on the basis of the three-dimensional information, the object on the display portion from the point of view of the user.

## Description

### [Technical Field]

The present invention relates to an information display system that displays information for an operator or the like who drives and operates an automobile or the like, a control method of the information display system, and a control program of the information display system.

### [Background Art]

Conventionally, proposals have been made for displaying, when an operator operates an apparatus such as a work machine, the situation of operator's surroundings on a display visible to the operator (for example, PTL 1).

### [Citation List]

### [Patent Literature]

[PTL 1] WO 2017/191853

### [Summary of Invention]

### [Technical Problem]

However, in such proposals, when displaying information on the surroundings, such as information on blind spot of the operator, on the display, shapes viewed from various angles that differ from a point of view of the operator are displayed as reference information.

Therefore, there has been a problem in that it is difficult for the operator to promptly ascertain the situation of surroundings or the like.

In addition, there has also been a problem in that, when displaying external information or the like, imaged by a camera, on the display in order to have the operator ascertain the external information, an image taken by the camera does not enable the operator to ascertain information on a portion that constitutes a blind spot of the operator from among structures and the like, i.e., external information.

In consideration thereof, an object of the present invention is to provide an information display system capable of showing to an object person viewing a display portion, such as a display, an object displayed on the display portion from a point of view of the operator in an accurate manner, a control method of the information display system, and a control program of the information display system.

### [Solution to Problem]

According to the present invention, the object described above can be achieved by an information display system including: a plurality of imaging apparatuses that image an object from a point of view that differs from a point of view of a user; and a display portion that displays the object from the point of view of the user, wherein the information display system generates three-dimensional information of the object on the basis of imaging information obtained by imaging the object by the plurality of imaging apparatuses and displays, on the basis of the three-dimensional information, the object on the display portion from the point of view of the user.

According to the configuration described above, three-dimensional information of an object is generated on the basis of imaging information obtained by imaging the object by the plurality of imaging apparatuses, and the object can be displayed on the display portion from the point of view of a user on the basis of the three-dimensional information.

Accordingly, the object can be displayed on the display portion from the point of view of the user and in an accurate manner.

Preferably, the three-dimensional information of the object is generated using a photogrammetric technique.

According to the configuration described above, since three-dimensional information is generated using a method of a photogrammetric technique such as SfM (Structure from Motion), the three-dimensional information of the object can be generated in an accurate manner.

Preferably, the object is present in a blind spot portion from the point of view of the user.

According to the configuration described above, even when the object is present in a blind spot portion from the point of view of the user, the object can be accurately displayed as three-dimensional information.

Preferably, the information display system includes a survey apparatus that performs a three-dimensional survey by irradiating the object with ranging light and receiving reflected ranging light from the object.

According to the configuration described above, three-dimensional shape information of the object can be accurately measured by a survey performed by a survey apparatus.

Therefore, by displaying three-dimensional information (point group information or the like) obtained by a survey together with three-dimensional information based on imaging information on the display portion, information with higher accuracy can be displayed.

According to the present invention, the object described above can be achieved by a control method of an information display system including: a plurality of imaging apparatuses that image an object from a point of view that differs from a point of view of a user; and a display portion that displays the object from the point of view of the user, the control method including generating three-dimensional information of the object on the basis of imaging information obtained by imaging the object by the plurality of imaging apparatuses and displaying, on the basis of the three-dimensional information, the object on the display portion from the point of view of the user.

According to the present invention, the object described above can be achieved by a control program of a monitoring system that causes an information display system including: a plurality of imaging apparatuses that image an object from a point of view that differs from a point of view of a user; and a display portion that displays the object from the point of view of the user, to execute: a function of generating three-dimensional information of the object on the basis of imaging information obtained by imaging the object by the plurality of imaging apparatuses; and a function of displaying, on the basis of the three-dimensional information, the object on the display portion from the point of view of the user.

### [Advantageous Effects of Invention]

The present invention can advantageously provide an information display system capable of showing to an object person viewing a display portion, such as a display, an object displayed on the display portion from a point of view of the operator in an accurate manner, a control method of the information display system, and a control program of the information display system.

### [Brief Description of Drawings]

FIG. 1 is a schematic view showing a "monitoring system 1" that is an embodiment of the information display system according to the present invention;
FIG. 2 is a schematic view showing main components of an "imaging unit 27" mounted to surveillance cameras X and Y shown in FIG. 1;
FIG. 3 is a schematic perspective view showing a survey apparatus T and the like shown in FIG. 1;
FIG. 4 is a schematic view showing a main internal structure of an enclosure 7 of survey apparatuses T and U shown in FIG. 3;
FIG. 5 is a schematic block diagram showing main components of a vehicle-mounted camera Z shown in FIG. 1;
FIG. 6 is a schematic block diagram showing main components of a camera Z-side first various information storage portion 110;
FIG. 7 is a schematic block diagram showing main components of a camera Z-side second various information storage portion 120;
FIG. 8 is a main flow chart showing a specification process of camera positional attitude information of the surveillance cameras X and Y, the vehicle-mounted camera Z of an automobile B, and the like shown in FIG. 1;
FIG. 9 is a schematic flow chart showing a process of displaying a warning of the presence of an automobile W and a pedestrian P shown in FIG. 1 on a display that is a display portion of the automobile B;
FIG. 10 is a schematic view showing an example in which the automobile W and the pedestrian P in FIG. 1 are displayed on the display of the automobile B;
FIGS. 11(a) and 11(b) are schematic views showing a modification of the display portion; and
FIG. 12 is a schematic view showing a screen example of a display of an automobile G.

### [Description of Embodiments]

Hereinafter, a preferred embodiment of the present invention will be described in detail with reference to accompanying drawings and the like.

Although the embodiment described below is a preferred specific example of the present invention and is therefore subjected to various favorable technical limitations, it is to be understood that the scope of the present invention is by no means limited by the described aspects unless specifically noted otherwise hereinafter.

### First Embodiment

### Overall Configuration of Monitoring System 1

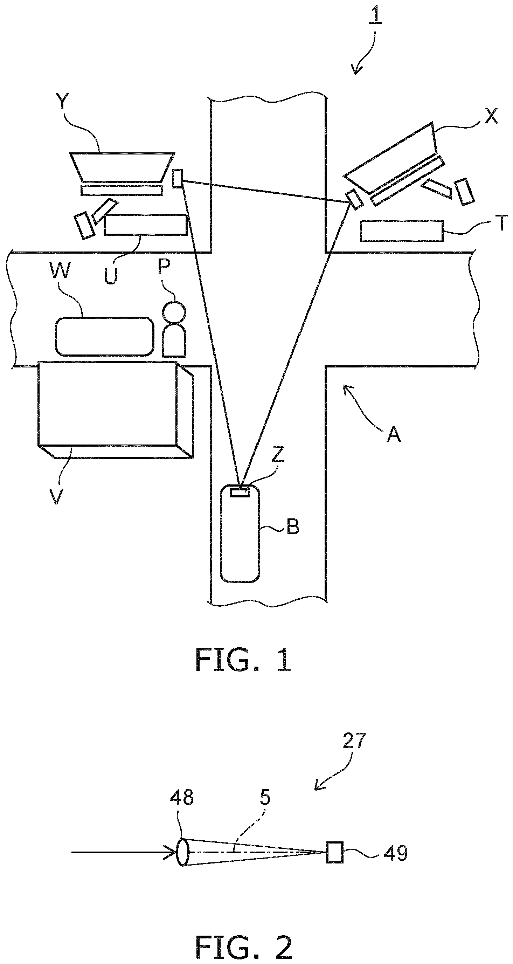

FIG. 1 is a schematic view showing a "monitoring system 1" that is an embodiment of the information display system according to the present invention.

As shown in FIG. 1, in the present system 1, for example, a surveillance camera X and a surveillance camera Y which are imaging apparatuses are installed at, for example, an intersection A.

In addition, a survey apparatus T and a survey apparatus U are also installed at the intersection A.

An automobile B is approaching the intersection A described above and, for example, a vehicle-mounted camera Z that is an imaging apparatus is installed in the automobile B and configured so as to capture an image from a point of view of a driver's seat of a user of the automobile B.

On the other hand, a building V that is visible from the user of the automobile B is arranged at the intersection A and, at the same time, for example, an automobile W and a pedestrian P which are objects are positioned in a blind spot portion of the user of the automobile B created by the building V, the automobile W and the pedestrian P being positioned so as to be visible from the surveillance cameras X and Y and surveyable from the survey apparatuses T and U.

Imaging Unit 27 of Surveillance Camera X etc. FIG. 2 is a schematic view showing main components of an "imaging unit 27" mounted to the surveillance cameras X and Y shown in FIG. 1.

As shown in FIG. 2, the imaging unit 27 has an imaging optical axis 5. The imaging optical axis 5 is configured such that an orientation thereof can be changed and, for example, images of the automobile W and the pedestrian P can be acquired by pointing the imaging optical axis 5 toward the automobile W and the pedestrian P.

In addition, an imaging lens 48 and an imaging element 49 are provided on the imaging optical axis 5. The imaging element 49 is a CCD or a CMOS sensor which is an aggregate of pixels, and a position of each pixel on an image element can be specified.

For example, a position of each pixel is specified in a coordinate system of which an origin is the optical axis of the imaging unit 27.

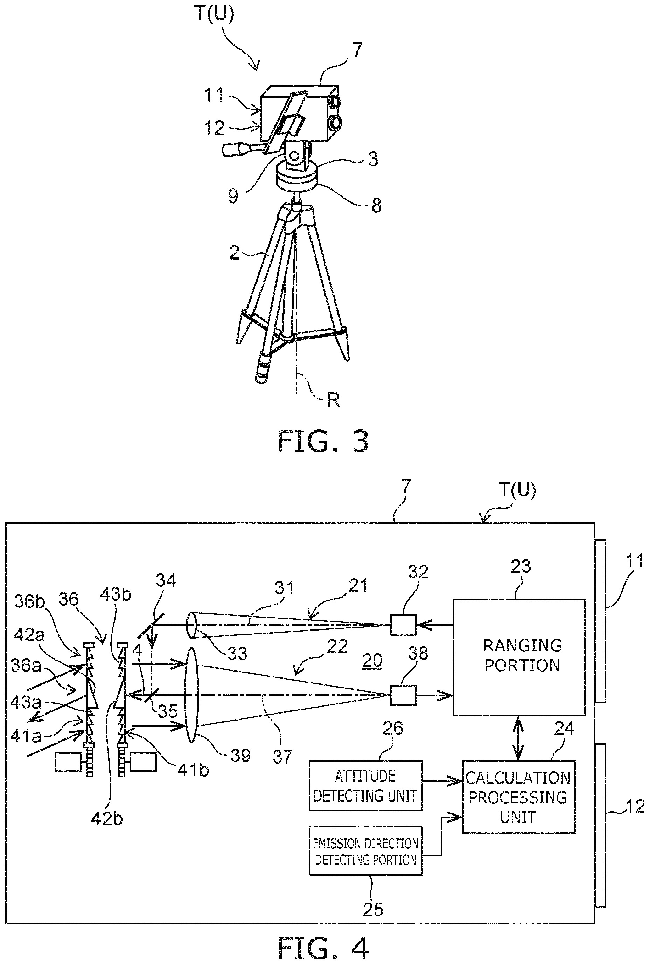

Main Components of Survey Apparatus T etc. FIG. 3 is a schematic perspective view showing the survey apparatus T and the like shown in FIG. 1.

As shown in FIG. 3, the survey apparatuses T and U are provided via a base unit 3 on a tripod 2 installed at an installation reference point R and are configured to be capable of three-dimensional measurement (survey) of, for example, the "automobile W" and the "pedestrian P" which are measurement objects.

The base unit 3 of the survey apparatus T and the like has a protractor plate 8 which rotates in a horizontal direction and which is capable of detecting a rotational angle and a vertical rotation portion 9 which is capable of rotating in a vertical direction and which can be fixed at a predetermined angle and, consequently, the survey apparatuses T and U are configured to be directly attached to the vertical rotation portion 9.

Therefore, the survey apparatuses T and U are also configured so as to rotate in the vertical direction around a machine reference point and rotate in the horizontal direction around the machine reference point.

FIG. 4 is a schematic view showing a main internal structure of an enclosure 7 of the survey apparatuses T and U shown in FIG. 3.

A survey apparatus-side display portion 11 and an operating portion 12 are provided on a rear surface of the enclosure 7 and a measurement unit 20 having a ranging optical axis 4, a calculation processing unit 24, an emission direction detecting portion 25 that detects an emission direction of ranging light, an attitude detecting unit 26 that detects an inclination of the survey apparatus 10 in the horizontal direction, an optical axis deflecting unit 36 that detects the ranging optical axis 4, and the like are provided inside the enclosure 7.

In addition, the measurement unit 20, the attitude detecting unit 26, and the optical axis deflecting unit 36 are integrally arranged.

The measurement unit 20 has a ranging light emitting portion 21, a light-receiving portion 22, and a ranging portion 23, the ranging light emitting portion 21 emits ranging light and has an emission optical axis 31, a light-emitting element 32 (such as a laser diode (LD)) is provided on the emission optical axis 31, and a projection lens 33 is further provided on the emission optical axis 31.

In addition, a first reflecting mirror 34 as a deflecting optical member is provided on the emission optical axis 31, and a second reflecting mirror 35 as a deflecting optical member is arranged on a reception optical axis 37 so as to face the first reflecting mirror 34.

Due to the first reflecting mirror 34 and the second reflecting mirror 35, the emission optical axis 31 is configured so as to become congruent with the ranging optical axis 4.

In addition, the optical axis deflecting unit 36 is arranged on the ranging optical axis 4.

While the light-receiving portion 22 receives reflected ranging light from the automobile W and the pedestrian P which are measurement objects, the light-receiving portion 22 has a reception optical axis 37 that is parallel to the emission optical axis 31 and the reception optical axis 37 is common to the ranging optical axis 4.

A light-receiving element 38 such as a photodiode (PD) is provided on the reception optical axis 37 and an imaging lens 39 is also arranged on the reception optical axis 37.

The imaging lens 39 focuses the reflected ranging light on the light-receiving element 38, and the light-receiving element 38 receives the reflected ranging light and generates a light reception signal. The light reception signal is input to the ranging portion 23.

### Optical Axis Deflecting Unit 36 of Survey

### Apparatuses T and U

The optical axis deflecting unit 36 is arranged on an object side of the imaging lens 39 on the reception optical axis 37 shown in FIG. 4.

The ranging portion 23 controls the light-emitting element 32 and causes the light-emitting element 32 to emit a laser beam as the ranging light.

The ranging optical axis 4 is configured to be deflected by the optical axis deflecting unit 36 (a ranging light deflecting portion 36a) so as to direct the laser beam toward a ranging point (the automobile W and the pedestrian P).

Specifically, the laser beam is emitted toward the automobile W and the pedestrian P, the reflected ranging light having been reflected by the automobile W and the pedestrian P which are measurement objects enters the light-receiving portion 22 via the optical axis deflecting unit 36 (a reflected ranging light deflecting portion 36b) and the imaging lens 39.

The reflected ranging light deflecting portion 36b re-deflects the ranging optical axis 4 having been deflected by the ranging light deflecting portion 36a so that the ranging optical axis 4 returns to its original state and causes the light-receiving element 38 to receive the reflected ranging light.

The light-receiving element 38 sends a light reception signal to the ranging portion 23 and the ranging portion 23 performs ranging of the measurement point (the automobile W and the pedestrian P) on the basis of the light reception signal from the light-receiving element 38.

As shown in FIG. 4, a pair of optical prisms 41a and 41b is arranged on the optical axis deflecting unit 36.

Fresnel prisms that are used as the optical prisms 41a and 41b are respectively constituted by prism elements 42a and 42b arranged in parallel and a large number of prism elements 43a and 43b, and have a plate shape.

Trajectory Control of Laser Using Optical Axis Deflecting Unit 36

Ranging light is emitted from the light-emitting element 32, the ranging light is made into a parallel luminous flux by the projection lens 33, passes through the ranging light deflecting portion 36a (the prism elements 42a and 42b), and emitted toward the automobile W and the pedestrian P which are measurement objects.

By passing through the ranging light deflecting portion 36a, the ranging light is deflected and output in a direction of the automobile W and the pedestrian P that is a necessary direction by the prism elements 42a and 42b.

In addition, the reflected ranging light having been reflected by the automobile W and the pedestrian P passes through and is incident to the reflected ranging light deflecting portion 36b (the prism elements 43a and 43b) and is focused on the light-receiving element 38 by the imaging lens 39.

Subsequently, due to the reflected ranging light passing through the reflected ranging light deflecting portion 36b, an optical axis of the reflected ranging light is deflected by the prism elements 43a and 43b so as to become congruent with the reception optical axis 37.

In other words, a configuration is adopted in which, due to a combination of rotational positions of the prism element 42a and the prism element 42b, a deflection direction and a deflection angle of the ranging light to be emitted can be arbitrarily changed.

While the survey apparatus according to the present embodiment does not have a camera, a configuration may be adopted in which the imaging apparatus has a camera function.

The surveillance cameras X and Y, the survey apparatuses T and U, and the vehicle-mounted camera Z of the automobile B shown in FIG. 1 have computers, and the computers include a CPU (Central Processing Unit), a RAM (Random Access Memory), a ROM (Read Only Memory), and the like (not illustrated) which are connected via a bus or the like.

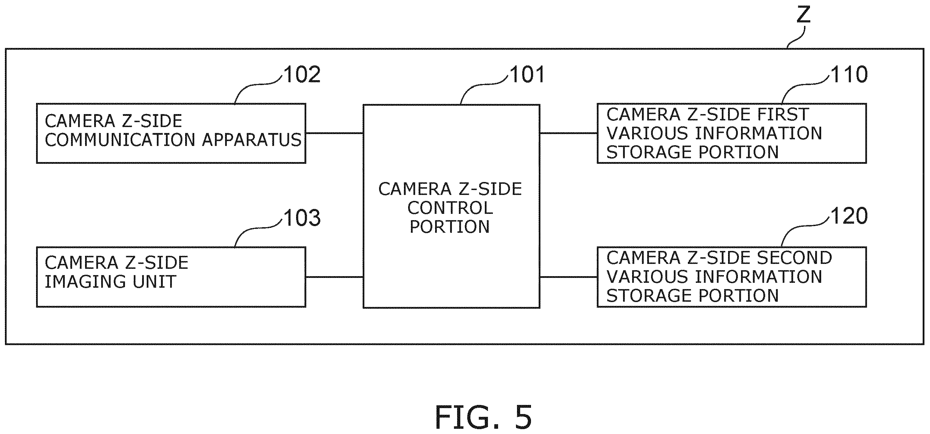

FIG. 5 is a schematic block diagram showing main components of the vehicle-mounted camera Z shown in FIG. 1.

As shown in FIG. 5, the vehicle-mounted camera Z has a "camera Z-side control portion 101", and in addition to controlling the "camera Z-side communication apparatus" that communicates with the surveillance camera X and the like shown in FIG. 1 and the "camera Z-side imaging unit 103" that images an object, the control portion 101 also controls a "camera Z-side first various information storage portion 110" and a "camera Z-side second various information storage portion 120".

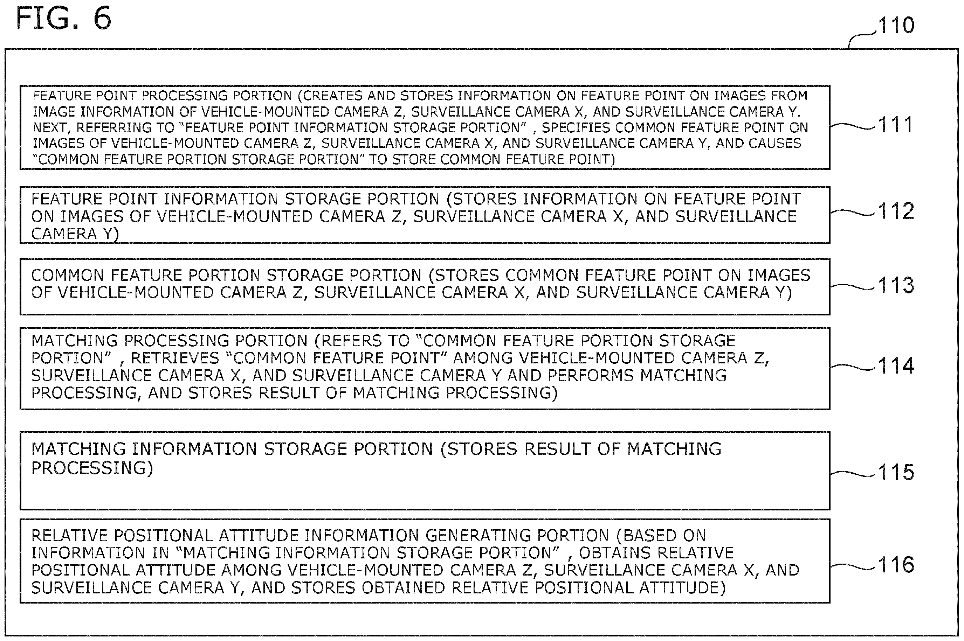

FIGS. 6 to 7 are, respectively, schematic block diagrams showing main components of the "camera Z-side first various information storage portion 110 and the "camera Z-side second various information storage portion 120". Contents of these components will be described later.

It should be noted that the "surveillance camera X", the "surveillance camera Y", the "vehicle-mounted camera Z", and the like shown in FIG. 1 are configured so that times of day can be synchronized with each other and acquisition of data can be executed at a designated time of day.

In addition, the respective cameras X, Y, and Z are also configured so as to be capable of acquiring an accurate time of day of photography using an GNSS (Global Navigation Satellite System) such as GPS (Global Positioning System) and accessing an NTP (Network Time protocol) server via an Internet network or the like (not illustrated) to acquire an accurate time of day.

In this case, an NTP server refers to a server that acquires and distributes accurate time of day information.

### Operation Example of Monitoring System 1 According to First Embodiment

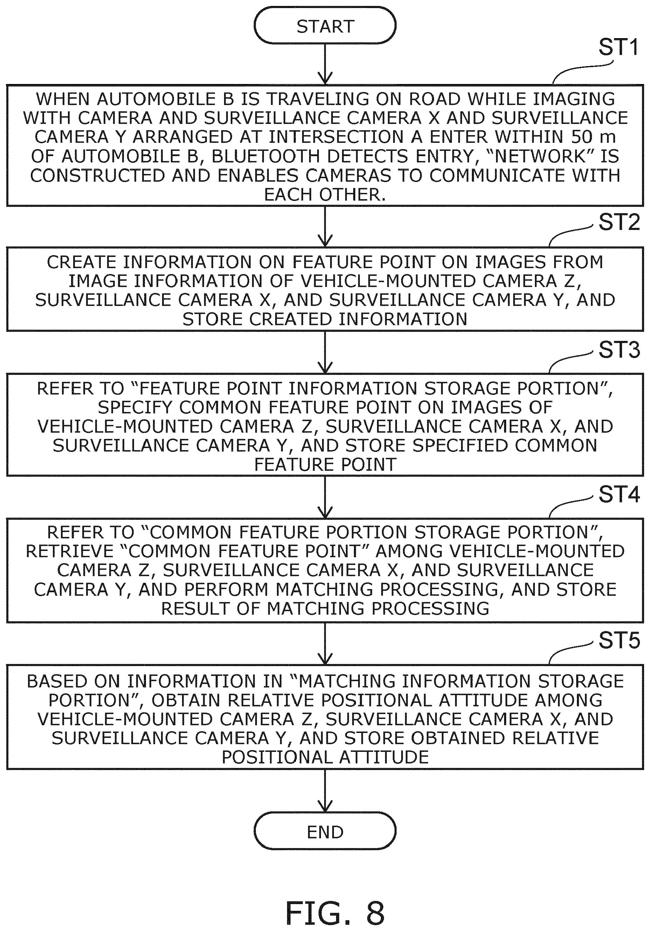

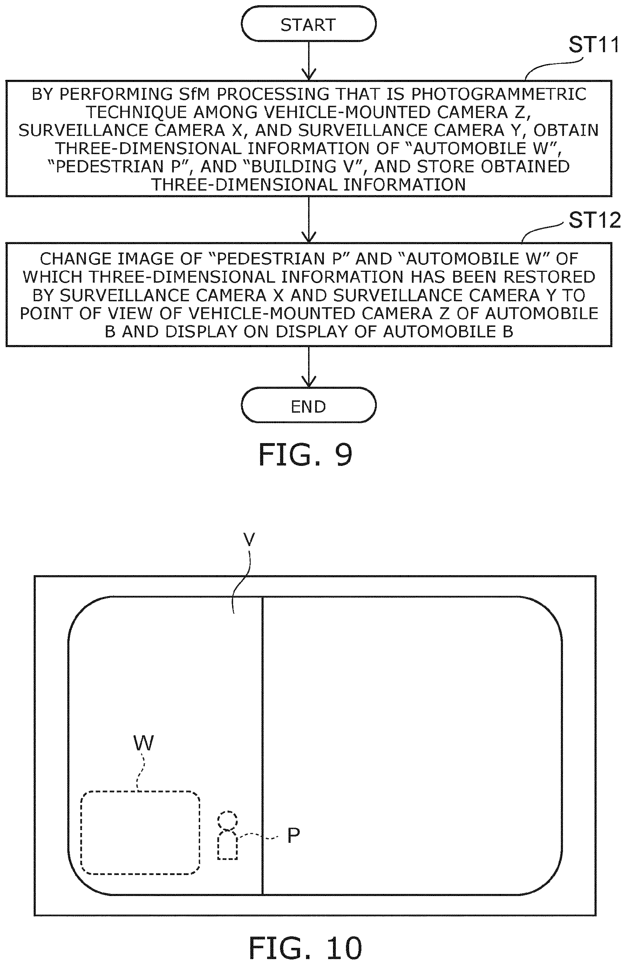

FIGS. 8 and 9 are schematic flow charts showing a main operation example of the monitoring system 1 according to the first embodiment.

Specifically, FIG. 8 is a schematic flow chart showing a specification process of camera positional attitude information of the surveillance cameras X and Y, the vehicle-mounted camera Z of the automobile B, and the like shown in FIG. 1, and FIG. 9 is a schematic flow chart showing a process of displaying a warning of the presence of the automobile W and the pedestrian P shown in FIG. 1 on a display that is a display portion of the automobile B.

In addition, the operation example shown in FIGS. 8 and 9 will be described using an example in which a warning of the presence of the automobile W and the pedestrian P is displayed mainly using the surveillance cameras X and Y shown in FIG. 1, and the survey apparatuses T and U will be described later.

First, a "specification process of camera positional attitude information of the surveillance cameras X and Y, the vehicle-mounted camera Z of an automobile B, and the like" will be described with reference to FIG. 8.

In step (hereinafter, referred to as "ST") 1 shown in FIG. 8, when the surveillance camera X and the surveillance camera Y arranged at the intersection A enter within 50 m of the automobile B being mounted with the vehicle-mounted camera Z shown in FIG. 1 and traveling on a road while imaging with the vehicle-mounted camera Z, the "camera Z-side communication apparatus 102" shown in FIG. 5 or, more specifically, Bluetooth detects that the surveillance camera X and the surveillance camera Y have entered within 50 m of the automobile B, constructs a "network" with the surveillance cameras X and Y, and creates a state where the three cameras Z, X, and Y can communicate with each other.

While a description using Bluetooth has been given in the present embodiment, the present invention is not limited thereto and GPS (Global Positioning System), the Internet, or the like may be used instead.

Next, in processes subsequent to ST2, positional information and attitude information of the three cameras (the surveillance camera X, the surveillance camera Y, and the vehicle-mounted camera Z) are generated.

While the processes are respectively executed by the three cameras, hereinafter, the vehicle-mounted camera Z will be described as an example.

First, in ST2, a "feature point processing portion (program) 111" shown in FIG. 6 of the vehicle-mounted camera Z operates to create information on a feature point on images from image information of the vehicle-mounted camera Z, the surveillance camera X, and the surveillance camera Y and store the created feature point information in a "feature point information storage portion 112" in FIG. 6.

The process then proceeds to ST3. In ST3, the processing portion 111 operates and refers to the "feature point information storage portion 112", specifies a common feature point on images of the vehicle-mounted camera Z, the surveillance camera X, and the surveillance camera Y, and causes a "common feature portion storage portion 113" to store the specified common feature point.

The process then proceeds to ST4. In ST4, a "matching processing portion (program) 114" shown in FIG. 6 operates and refers to the "common feature portion storage portion 113", retrieves a "common feature point" among the vehicle-mounted camera Z, the surveillance camera X, and the surveillance camera Y and performs matching processing, and stores a result of the matching processing in a "matching information storage portion 115" shown.

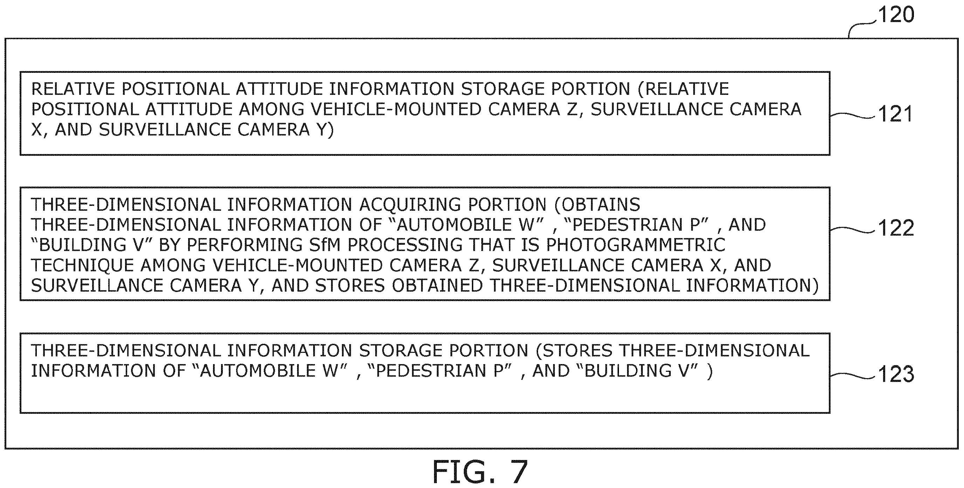

Next, a "relative positional attitude information generating portion (program) 116" shown in FIG. 6 operates and, based on information in the "matching information storage portion 115", obtains a relative positional attitude among the vehicle-mounted camera Z, the surveillance camera X, and the surveillance camera Y, and stores the obtained relative positional attitude in a "relative positional attitude information storage portion 121" shown in FIG. 7.

As a result, a camera positional attitude of each camera (each of the vehicle-mounted camera Z, the surveillance camera X, and the surveillance camera Y) is specified.

Next, a process of detecting the "automobile W" and the "pedestrian P" which correspond to a blind spot portion of the building V shown in FIG. 1 from the vehicle-mounted camera Z of the automobile B, displaying the detected "automobile W" and "pedestrian P" on a display portion (display) or the like of the automobile B, and issuing a warning or the like will be described with reference to FIG. 9.

FIG. 9 is a schematic flow chart showing a process of displaying a warning of the presence of the automobile W and the pedestrian P shown in FIG. 1 on a display that is a display portion of the automobile B as described above.

First, in ST11 in FIG. 9, the "three-dimensional information acquiring portion (program) 122" shown in FIG. 7 operates and, by causing SfM processing that is a photogrammetric technique to be performed among the vehicle-mounted camera Z, the surveillance camera X, and the surveillance camera Y, three-dimensional information of the "automobile W", the "pedestrian P", and the "building V" are obtained and stored in the "three-dimensional information storage portion 123" shown in FIG. 7.

Specifically, using a method such as SfM (Structure from Motion) that is a photogrammetric technique, three-dimensional information of the "building V", the "pedestrian P", and the "automobile W" which appear in a supplied image is restored, and the restoration information is shared by each camera.

Specifically, the "building V" is restored by the vehicle-mounted camera Z, the surveillance camera X, and the surveillance camera Y and the "pedestrian P" and the "automobile W" are restored by the surveillance camera X and the surveillance camera Y.

The process then proceeds to ST12. In ST12, an image of the "pedestrian P" and the "automobile W" of which three-dimensional information has been restored by the surveillance camera X and the surveillance camera Y is changed to a point of view of the vehicle-mounted camera Z of the automobile B and displayed on the display of the automobile B.

Since positional information and attitude information of each camera (each of the vehicle-mounted camera Z, the surveillance camera X, and the surveillance camera Y) have been acquired as described above by the process shown in FIG. 8, an image taken by another camera (the surveillance cameras X and Y) can be converted into the point of view of the vehicle-mounted camera Z.

FIG. 10 is a schematic view showing an example in which the automobile W and the pedestrian P shown in FIG. 1 are displayed on the display of the automobile B.

As shown in FIG. 10, the display displays an image from the point of view of the vehicle-mounted camera Z of the automobile B and, at the same time, the "pedestrian P" and the "automobile W" which are positioned in a blind spot hidden behind the building V are indicated by dashed lines.

Therefore, a driver of the automobile B and the like can readily ascertain and beware of the "pedestrian P" and the like in the blind spot portion by simply viewing the display and viewing a single screen.

In other words, since the blind spot portion is not displayed in a window or the like showing a different image from a different point of view as is conventional, the driver and the like can promptly and accurately ascertain a risk or the like.

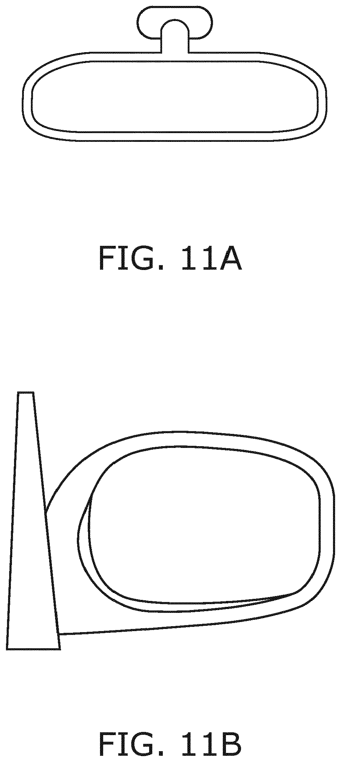

While the display portion has been described in the present embodiment as a display provided in the automobile B as shown in FIG. 10, the present invention is not limited thereto and the display portion may be a "rearview mirror" shown in FIG. 11(a) or a "side mirror" shown in FIG. 11(b) or, alternatively, a mode in which display is performed on a windshield or the like may be adopted.

Furthermore, the automobile W and the pedestrian P may be displayed together with map information on a display used by a car navigation system.

FIGS. 11(a) and 11(b) are schematic views showing a modification of the display portion.

### Another Operation Example of Monitoring System 1 According to First Embodiment

Since the survey apparatuses T and U are arranged at the intersection A shown in FIG. 1 and the survey apparatuses T and U are configured as shown in FIGS. 3 and 4, the survey apparatuses T and U may be used independently or in combination with the surveillance cameras X and Y.

In this case, when the automobile B approaches the intersection A and the automobile B comes within 50 m of the survey apparatus T and the survey apparatus U, a "network" is constructed and communication can be performed in a similar manner to the surveillance camera X and the like described earlier.

Next, the survey apparatuses T and U shown in FIG. 1 and the like acquire accurate three-dimensional information (point group information or the like) of the automobile W and the pedestrian P by irradiating the automobile W and the pedestrian P with ranging light and receiving reflected light.

In addition, by converting the accurate three-dimensional point group information or the like acquired by the survey apparatus T and the like into the point of view of the vehicle-mounted camera Z and displaying the converted information on the display of the automobile B or the like, the driver of the automobile B is capable of viewing information with higher accuracy.

### Second Embodiment

Since many components of the present embodiment are similar to those of the first embodiment described above, the following description will focus on differences instead.

In the present embodiment, the automobile B shown in FIG. 1 is an emergency vehicle configured to notify automobiles present within 50 m of its own approach and to display the automobile W and the pedestrian P in a blind spot portion on a display of the emergency vehicle.

Specifically, a configuration is adopted in which a network is constructed with a vehicle-mounted camera of an automobile capable of communicating using Bluetooth within a 50 m-radius of a vehicle-mounted camera of the emergency vehicle and an approach by the emergency vehicle is notified.

Accordingly, since the emergency vehicle can notify another automobile that the emergency vehicle is approaching the other vehicle and, at the same time, since the emergency vehicle can also ascertain a blind spot portion of the emergency vehicle, the emergency vehicle can travel more safely.

### Third Embodiment

Since many components of the present embodiment are similar to those of the first embodiment described above, the following description will focus on differences instead.

The present embodiment represents an example in which a construction vehicle E and heavy machinery F are present at a construction/building site D and an automobile G is being driven on the site D.

In this case, vehicle-mounted cameras H, I, and J are respectively installed on the automobile G, the construction vehicle E, and the heavy machinery F.

In the present embodiment, when the automobile G is traveling and the vehicle-mounted camera I of the construction vehicle E and the vehicle-mounted camera J of the heavy machinery F approach the automobile G within a radius of 50 m, the approach is detected by Bluetooth in a similar manner to the first embodiment, a "network" is constructed among the three vehicle-mounted cameras H, I, and J, and the three vehicle-mounted cameras H, I, and J communicate with each other.

Next, in a similar manner to the first embodiment, relative positional attitude information of the three vehicle-mounted cameras H, I, and J is specified.

Accordingly, a camera positional attitude of each of the vehicle-mounted cameras H, I, and J is specified.

Next, in a similar manner to the first embodiment, an object in a blind spot portion is detected.

Specifically, a configuration is adopted in which, while a "fill L" that is visible from the vehicle-mounted camera H of the automobile G and a "worker K" present in a blind spot portion hidden by the "fill L" are detected, three-dimensional information is obtained by SfM (Structure from Motion) processing that is a photogrammetric technique among the three vehicle-mounted cameras H, I, and J in a similar manner to the first embodiment.

In other words, using a method such as SfM, three-dimensional information of the "worker K" and the "fill L" which appear in a supplied image is restored, and the restoration information is shared by each of the cameras H, I, and J.

Specifically, the "worker K" is restored by the vehicle-mounted cameras I and J of the construction vehicle E and the heavy machinery F and the "fill L" is restored by the vehicle-mounted cameras H, I, and J of the automobile G, the construction vehicle E, and the heavy machinery F.

In addition, an image of the "worker K" of which three-dimensional information has been restored by the vehicle-mounted cameras I and J of the construction vehicle E and the heavy machinery F can be changed to a point of view of the vehicle-mounted camera H of the automobile G and displayed on the display of the automobile G.

Accordingly, the point of view of the vehicle-mounted camera H of the automobile G and the "worker K" in a blind spot of the "fill L" can be ascertained and a state thereof can be displayed.

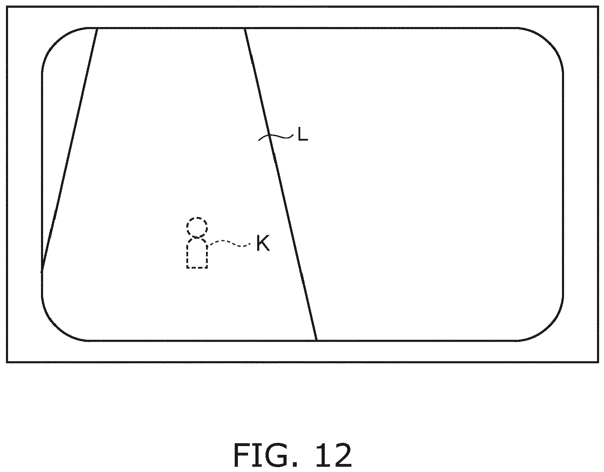

FIG. 12 is a schematic view showing a screen example of the display of the automobile G.

As shown in FIG. 12, by displaying the fill L and indicating the worker K in a blind spot hidden by the fill L by a dashed line or the like, the display can alert a driver of the automobile G or the like to the worker K.

Even in the present embodiment, the display that is a display portion is not limited to the display shown in FIG. 12 and may be a windshield, a side mirror, a rearview mirror, or the like in a similar manner to the first embodiment. In addition, the information may be displayed together with a map or the like in a car navigation system.

Furthermore, a configuration may be adopted in which, when distances between the automobile G and the construction vehicle E and the heavy machinery F are calculated and the distances are too short, a warning is output to the automobile G and, further, the construction vehicle E and the heavy machinery F are controlled and stopped.

While the present embodiment has been described above using an example in which the present invention is realized as an apparatus, the present invention is not limited thereto and a program to be executed by a computer may be distributed while being stored in storage media such as a magnetic disk (a floppy (registered trademark) disk, a hard disk, or the like), an optical disk (a CD-ROM, a DVD, or the like), a magneto optical disk (MO), and a semiconductor memory.

In addition, the storage media may be any storage media that are capable of storing a program and readable by a computer. A storage format of the storage media is not particularly limited.

Furthermore, an OS (operating system) running on a computer based on instructions of a program having been installed to the computer from a storage medium, MW (middleware) such as database management software and network software, and the like may execute a part of processing steps for realizing the present embodiment.

Moreover, the storage media in the present invention are not limited to media that are independent of a computer and include storage media to which a program transmitted through a LAN, the Internet, or the like has been downloaded and which store or temporarily store the downloaded program.

In addition, the computer in the present invention need only execute respective processing steps in the present embodiment based on a program stored in a storage medium and may be an apparatus constituted by a single personal computer (PC) or the like or may be a system or the like in which a plurality of apparatuses are connected via a network.

Furthermore, the computer in the present invention is not limited to a personal computer and collectively refers to devices and apparatuses capable of realizing functions of the present invention including arithmetic processing units and microcomputers included in information processing devices.

An embodiment of the present invention has been described above. However, it is to be understood that the present invention is not limited to the embodiment described above and that various modifications can be made without departing from the scope of the appended claims.

### [Reference Signs List]

- 1: monitoring system
- 2: tripod
- 3: base unit
- 5: imaging optical axis
- 7: enclosure
- 8: protractor plate
- 9: vertical rotation portion
- 10: survey apparatus
- 11: survey apparatus-side display portion
- 12: operating portion
- 20: measurement unit
- 21: ranging light emitting portion
- 22: light-receiving portion
- 23: ranging portion
- 24: calculation processing unit
- 25: emission direction detecting portion
- 26: attitude detecting unit
- 27: imaging unit
- 31: emission optical axis
- 32: light-emitting element
- 33: projection lens
- 34: first reflecting mirror
- 35: second reflecting mirror
- 36: optical axis deflecting unit
- 36a: ranging light deflecting portion
- 36b: reflected ranging light deflecting portion
- 37: reception optical axis
- 38: light-receiving element
- 39: imaging lens
- 41a 41b: optical prisms
- 42a 42b: prism elements
- 43a 43b: prism elements
- 48: imaging lens
- 49: imaging element
- 101: camera Z-side control portion
- 102: camera Z-side communication apparatus
- 103: camera Z-side imaging unit
- 110: camera Z-side first various information storage portion
- 111: feature point processing portion
- 112: feature point information storage portion
- 113: common feature portion storage portion
- 114: matching processing portion
- 115: matching information storage portion
- 116: relative positional attitude information generating portion
- 120: camera Z-side second various information storage portion
- 121: relative positional attitude information storage portion
- 122: three-dimensional information acquiring portion
- 123: three-dimensional information storage portion
- A: intersection
- B, W: automobile
- K: worker
- L: fill
- P: pedestrian
- T, U: survey apparatuses
- V: building
- X, Y: surveillance cameras

## Claims

1. An information display system comprising:
a plurality of imaging apparatuses that image an object from a point of view that differs from a point of view of a user; and
a display portion that displays the object from the point of view of the user, wherein
the information display system generates three-dimensional information of the object on the basis of imaging information obtained by imaging the object by the plurality of imaging apparatuses and displays, on the basis of the three-dimensional information, the object on the display portion from the point of view of the user.

2. The information display system according to claim 1, wherein the three-dimensional information of the object is generated using a photogrammetric technique.

3. The information display system according to claim 1 or 2, wherein the object is present in a blind spot portion from the point of view of the user.

4. The information display system according to any one of claims 1 to 3, comprising a survey apparatus that performs a three-dimensional survey by irradiating the object with ranging light and receiving reflected ranging light from the object.

5. A control method of an information display system including:
a plurality of imaging apparatuses that image an object from a point of view that differs from a point of view of a user; and
a display portion that displays the object from the point of view of the user, the control method comprising
generating three-dimensional information of the object on the basis of imaging information obtained by imaging the object by the plurality of imaging apparatuses and displaying, on the basis of the three-dimensional information, the object on the display portion from the point of view of the user.

6. A control program of a monitoring system that causes an information display system including:
a plurality of imaging apparatuses that image an object from a point of view that differs from a point of view of a user; and
a display portion that displays the object from the point of view of the user, to execute:
a function of generating three-dimensional information of the object on the basis of imaging information obtained by imaging the object by the plurality of imaging apparatuses; and
a function of displaying, on the basis of the three-dimensional information, the object on the display portion from the point of view of the user.
